# EUROPÄISCHE PATENTSCHRIFT

(11) **EP 1 104 358 B1**
(45) Veröffentlichungstag und Bekanntmachung des Hinweises auf die Patenterteilung: **02.10.2002**
(21) Anmeldenummer: 99939372.1
(22) Anmeldetag: 18.06.1999
(51) Int. Cl.: B60J 7/057, B60J 10/12, E05F 15/00

(54) **ANORDNUNG ZUR DETEKTION VON HINDERNISSEN**
SYSTEM FOR DETECTING OBSTACLES
DISPOSITIF DE DETECTION D'OBSTACLES

(30) Priorität: 10.08.1998 DE 19836056
(43) Veröffentlichungstag der Anmeldung: 06.06.2001
(73) Patentinhaber: ROBERT BOSCH GMBH, 70442 Stuttgart (DE)
(72) Erfinder: WEBER, Jens, D-65779 Kelkheim-Fischbach (DE); HOETZEL, Juergen, D-61197 Florstadt (DE); TSCHISKALE, Ega, D-78333 Hoppetenzell (DE); LAMPARTH, Oliver, D-78239 Rielasingen (DE); SPEIGEL, Achim, D-76359 Marxzell (DE)
(86) Internationale Anmeldenummer: DE9901799
(87) Internationale Veröffentlichungsnummer: WO00009355

(56) Entgegenhaltungen:
- EP-A- 0 648 628
- EP-A- 0 856 425
- DE-A- 4 004 353

## Beschreibung

Die Erfindung betrifft eine Anordnung zur Detektion von Hindernissen, insbesondere beim automatischen Schließen von Cabrio-Verdecken, Kraftfahrzeug-Fenstern oder dergleichen.

Beim automatischen Schließen von Cabrio-Verdecken oder Seitenfenstern eines Kraftfahrzeuges besteht die Gefahr, daß beispielsweise die Hand einer Person oder ein anderer Gegenstand zwischen sich schließendem Cabrio-Verdeck und Querholm der Frontscheibe bzw. zwischen sich schließendem Seitenfenster und oberen Querholm des Fensterrahmens eingeklemmt werden kann. Dabei kann es natürlich nicht nur zur Beschädigung des eingeklemmten Gegenstandes, sondern möglicherweise auch von entsprechenden Teilen der Schließvorrichtung kommen.

Eine Anordnung zur Detektion von Hindernissen gemäß dem Oberbegriff des Anspruchs 1 ist aus dem Dokument EP 0 856 425 A1 bekannt.

Der vorliegenden Erfindung liegt daher die Aufgabe zugrunde, eine Anordnung zur Detektion von Hindernissen der eingangs genannten Art anzugeben, wobei in einfacher Weise eine Unterscheidung zwischen Hindernissen und dem sich schließenden Cabrio-Verdeck bzw. Seitenfenstern gewährleistet ist.

Diese Aufgabe wird erfindungsgemäß dadurch gelöst, daß eine kapazitive Sensoreinrichtung, bestehend aus einer elektrisch leitenden Senderfläche auf der einen Seite und einem elektrisch leitenden Sensordraht und mindestens einer im wesentlichen potentialfreien Metallfläche auf der anderen Seite eines Isolators, vorgesehen ist und daß die Senderfläche und der Sensordraht an eine Auswerte-Schaltung angeschlossen sind.

Die erfindungsgemäße Anordnung hat den Vorteil, daß ein einfacher geometrischer Aufbau für das Kraftfahrzeug realisierbar ist. Sie verhindert das Einklemmen von Gegenständen und schaltet bei Gefahr den Motor ab bzw. läßt einen Motoranlauf nicht zu.

Eine vorteilhafte Ausbildung der erfindungsgemäßen Anordnung besteht darin, daß die mit einer Wechselspannung beaufschlagte Senderfläche gegenüber der durch den Isolator beabstandeten Metallfläche angeordnet ist, welche einen für die Aufnahme des Sensordrahtes im Isolator geeignet geformten Ausschnitt aufweist, und daß der Sensordraht an die Auswerte-Schaltung angeschlossen ist, an deren Ausgang ein Motorschaltsignal für das Schalten eines Antriebsmotors abnehmbar ist.

Dabei hat sich besonders bewährt, daß die Auswerte-Schaltung aus einem Strom-Spannungs-Wandler zur Abgabe eines Meßsignals und nachgeschalteter, mit der Wechselspannung und dem Meßsignal gespeister phasenabhängiger Gleichrichteranordnung besteht und daß am Ausgang der phasenabhängigen Gleichrichteranordnung das Motorschaltsignal für das Freigeben des Antriebsmotors mit einem ersten Pegel und für das Abschalten des Antriebsmotors beim Auftreten von Hindernissen in der Nähe der Sensoreinrichtung mit einem zweiten Pegel abnehmbar ist.

Zur Vermeidung von Störungen hat sich als vorteilhaft erwiesen, daß die phasenabhängige Gleichrichteranordnung einen Phasenschieber enthält, an dessen Eingang die Wechselspannung als Referenzsignal anliegt und dessen Ausgang mit je einem Eingang zweier Schwellwertschaltungen zur Ableitung von Schaltspannungen verbunden ist, deren jeweiliger Ausgang an je einen Steuereingang zweier Analogschalter angeschlossen ist, daß das Meßsignal dem einen Analogschalter direkt und dem anderen Analogschalter invertiert zugeführt wird, daß der Ausgang jedes Analogschalters mit je einem Eingang einer Addierstufe verbunden ist, an deren Ausgang über einen Tiefpaß das Motorschaltsignal abnehmbar ist.

Bei einer besonders vorteilhaften Ausbildung der Erfindung wird vorgeschlagen, daß die Sensoreinrichtung für die Detektion von Hindernissen beim Schließen des Cabrio-Verdeckes im Querholm oberhalb der Frontscheibe des Kraftfahrzeuges integriert ist.

Bei einer weiteren vorteilhaften Varianten der Erfidnung wird vorgeschlagen, daß die Sensoreinrichtung für die Detektion von Hindernissen beim Schließen der Seitenfenster in den oberen Querholm der Fensterrahmen integriert ist.

Der Isolator kann von einem Streifen aus geeignetem Werkstoff gebildet sein. Eine besonders vorteilhafte Möglichkeit zur Ausführung der erfindungsgemäßen Anordnung besteht darin, daß die Sensoreinrichtung von einer elastischen Streifendichtung umschlossen ist, die auch den Isolator bildet.

Ein Ausführungsbeispiel der Erfindung ist in der Zeichnung anhand mehrerer Figuren dargestellt und in der nachfolgenden Beschreibung näher erläutert. Es zeigt:
- Fig. 1: den vorderen Teil eines Cabrios in Seitenansicht,
- Fig. 2: eine kapazitive Sensoreinrichtung in schematischer Darstellung,
- Fig. 3: ein Schaltbild der kapazitiven Sensoreinrichtung mit angeschlossenem Eingangsverstärker,
- Fig. 4: ein Blockschaltbild einer phasenabhängigen Gleichrichteranordnung,
- Fig. 5: Strom- bzw. Spannungs-Zeit-Diagramme von in Fig. 4 vorkommenden Signalen und
- Fig. 6: einen Querschnitt durch eine in einer Streifendichtung angeordnete Sensoreinrichtung.

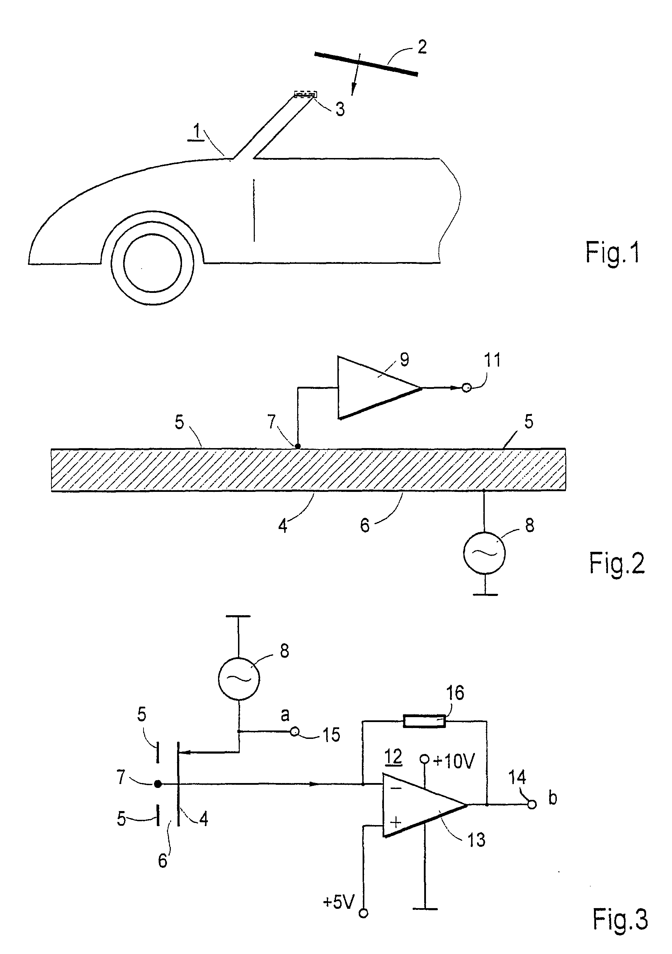

Fig. 1 zeigt im Umriß den vorderen Teil eines Cabrios 1, bei welchem sich das Cabrio-Verdeck 2 einer oberhalb der Frontscheibe angeordneten kapazitiven Sensoreinrichtung 3 beim Schließen (in Pfeilrichtung) nähert. Bei der Detektion von Hindernissen, zum Beispiel menschlichen Körperteilen, in der Nähe der Sensoreinrichtung 3 wird mit Hilfe der daran angeschlossenen Auswerte-Schaltung, welche weiter unten näher beschrieben wird, ein für das Bewegen des Verdeckes 2 vorgesehener - in der Zeichnung nicht dargestellter - Antriebsmotor so gesteuert, daß ein Einklemmen eines Gegenstandes nicht möglich ist.

Die für die Detektion von Hindernissen vorgeschlagene Sensoreinrichtung 3 ist in Fig. 2 schematisch dargestellt. Sie umfaßt im wesentlichen eine Senderfläche 4 aus elektrisch leitendem Material, eine Metallfläche 5 ohne festes Potential, einen zwischen diesen beiden angeordneten Isolator 6 sowie einen Sensordraht 7. An die Senderfläche 4 ist ein Sinus-Oszillator 8 angeschlossen, wodurch die Senderfläche 4 eine Wechselspannung - im folgenden auch Sinussignal genannt - an die Umgebung abgeben kann. Von dem als Antenne wirkenden Sensordraht 7 wird dieses Sinussignal aufgenommen und an eine Auswerte-Schaltung 9 weitergeleitet, an deren Ausgang 11 ein Schaltsignal für den Antriebsmotor des Cabrio-Verdeckes abnehmbar ist.

Ohne ein Hindernis liegt am Sensordraht 7 das von der Senderfläche 4 ausgestrahlte Sinussignal mit einer bestimmten Feldstärke an. Der Antriebsmotor des Cabrio-Verdeckes erhält hierbei ein bestimmtes Schaltsignal vom Ausgang 11, welches das automatische Schließen des Verdeckes 2 im Fall, daß keine Gefahr besteht bzw. kein Hindernis im Einklemmbereich ist, erlaubt. Berührt nun ein Gegenstand oder ein Mensch die Metallflächen 5, wird wegen der erhöhten Kopplung der Metallflächen 5 gegen Masse die Feldliniendichte am Sensordraht 7 stark geschwächt. Somit sinkt das empfangene Sinussignal deutlich, wodurch am Ausgang 11 der Auswerte-Schaltung 9 ein entsprechendes, den Antriebsmotor abschaltendes Schaltsignal entsteht. Dadurch wird jede Berührung der Metallflächen 5 sicher detektiert und der jeweilige Gegenstand vor Einklemmen geschützt. Dabei wird eine Abschaltung durch die sich nähernde Kante des Verdeckes vor der Berührung verhindert.

In Fig. 3 ist ein Schaltbild eines an die Sensoreinrichtung 4 bis 7 angeschlossenen als Strom-Spannungs-Wandler wirkenden Eingangsverstärkers 12 der Auswerte-Schaltung 9 dargestellt, wobei der Sensordraht 7 direkt mit dem invertierenden Eingang eines über einen Widerstand 16 gegengekoppelten Operationsverstärkers 13 verbunden ist, an dessen Ausgang 14 das Meßsignal b abnehmbar ist. Der Sinus-Oszillator 8 ist hierbei nicht nur mit der Senderfläche 4, sondern auch mit einem Ausgang 15 verbunden, an welchem das Sinussignal a abnehmbar ist.

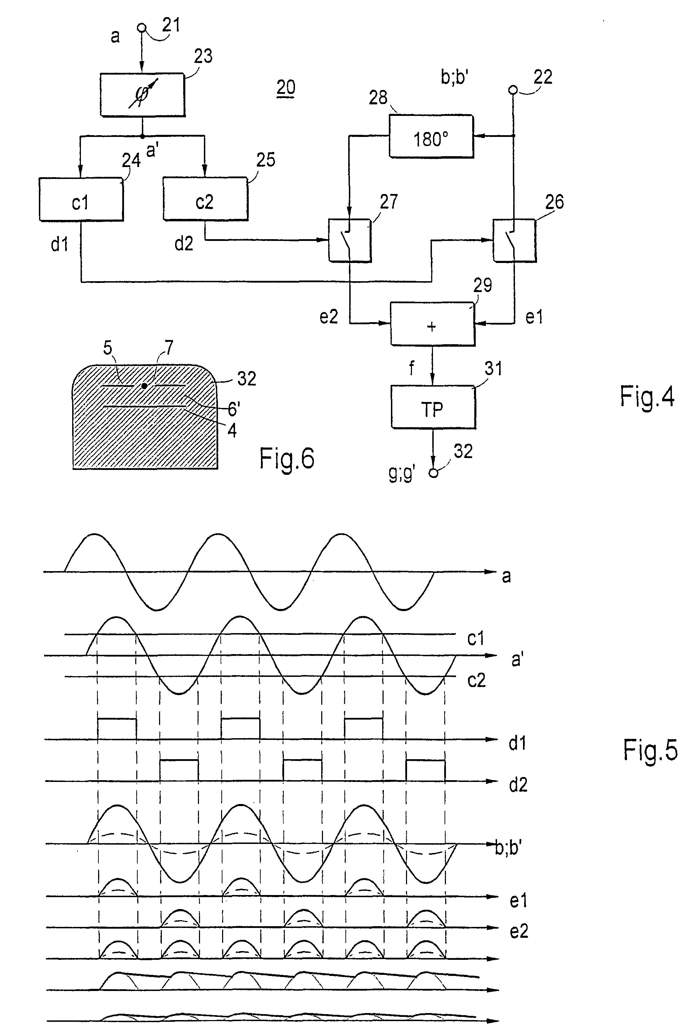

Sowohl das am Ausgang 15 abnehmbare Sinussignal a als auch das am Ausgang 14 abnehmbare Meßsignal b werden zur weiteren Verarbeitung einer nachfolgenden phasenabhängigen Gleichrichteranordnung 20 gemäß Fig. 4 zugeführt. Am Eingang 21 liegt das Sinussignal a und am Eingang 22 das Meßsignal b an.

Zur besseren Erläuterung des Blockschaltbildes nach Fig. 4 sind die darin vorkommenden Signale a bis g in Fig. 5 gezeigt.

Das Sinussignal a wird zunächst in einer Phasenschieberschaltung 23 in seiner Phase der des Meßsignals b angepaßt. Danach wird das phasenverschobene Sinussignal a' je einer Schwellwertschaltung 24, 25 zugeführt, in welchen die positiven Halbwellen beim Schwellwert c1 bzw. die negativen Halbwellen beim Schwellwert c2 abgeschnitten werden. Die daraus abgeleiteten Rechtecksignale d1 und d2, deren Dauer weniger als 180° betragen, werden jeweils dem Steuereingang zweier Analogschalter 26 und 27 zugeführt.

Am Signaleingang des Analogschalters 26 liegt das über den Eingang 22 zugeführte Meßsignal b direkt und am Signaleingang des Analogschalters 27 das über eine Inverterschaltung 28 geleitete, um 180° phasenverschobene Meßsignal b an. Während der positiven Impulse der Signale d1 und d2 werden die Analogschalter 26 und 27 leitend, und es entstehen somit an den Ausgängen der Analogschalter 26 bzw. 27 verkürzte gleichgerichtete angenäherte Sinushalbwellen e1 und e2. Diese werden danach in der Addierstufe 29 zum gleichgerichteten Sinussignal f zusammengesetzt und über einen Tiefpaß 31 geführt, an dessen Ausgang 32 schließlich ein geglättetes Gleichspannungssignal g als Motorschaltsignal zur Verfügung steht.

Wird nun der normale Schließbetrieb, bei dem das Meßsignal b entsteht, durch Berührung der Sensoreinrichtung 3 (Fig. 1) gestört, dann nimmt die Amplitude (gestrichelt dargestellt) des Meßsignals gemäß b' stark ab. Am Ausgang 32 ist dann ein Gleichspannungssignal g' mit einem Gleichspannungswert nahe 0 abnehmbar, wodurch der Antriebsmotor sofort abgeschaltet wird.

Da sich der Wert des Meßsignals b beim Berühren der Metallflächen 5 schlagartig ändert, kann ein Schwellwert c leicht eingestellt werden. Der Temperatureinfluß bleibt dabei gering gegenüber der Meßwertänderung.

Durch Verwendung des Sinussignals a des Oszillators 8 als Referenzsignal wird die Filterfrequenz der phasenabhängigen Gleichrichteranordnung 20 nachgeführt. Dadurch spielen temperaturbedingte Frequenzdrifts des Sinus-Oszillators 8 keine Rolle mehr. Außerdem entsteht dabei ein schmaler Filterbereich, der gegen Störfrequenzen unempfindlich ist.

Fig. 6 zeigt eine Streifendichtung 32 im Querschnitt mit der Senderfläche 4, dem Sensordraht 7 und potentialfreien Metallflächen 5 sowie dem von der Streifendichtung gebildeten Isolator 6'.

## Patentansprüche

1. Anordnung zur Detektion von Hindernissen, insbesondere beim automatischen Schließen von Cabrio-Verdecken (2), Kraftfahrzeug-Fenstern oder dergleichen, mit einer kapazitive Sensoreinrichtung **dadurch gekennzeichnet, dass** die kapazitive Sensoreinrichtung (3), bestehend aus einer elektrisch leitenden Senderfläche (4), an die ein Oszillator (8) angeschlossen ist, auf der einen Seite und einem elektrisch leitenden Sensordraht (7) und mindestens einer im Wesentlichen potentialfreien Metallfläche (5) auf der anderen Seite eines Isolators (6), vorgesehen ist und dass der Sensordraht (7) an eine Auswerte-Schaltung (9) angeschlossen ist.

2. Anordnung nach Anspruch 1, **dadurch gekennzeichnet, daß** die mit einer Wechselspannung (a) beaufschlagte Senderfläche (4) gegenüber der durch den Isolator (6) beabstandeten Metallfläche (5) angeordnet ist, welche einen für die Aufnahme des Sensordrahtes (7) im Isolator (6) geeignet geformten Ausschnitt aufweist, und daß der Sensordraht (7) an die Auswerte-Schaltung (9) angeschlossen ist, an deren Ausgang (11) ein Motorschaltsignal für das Schalten eines Antriebsmotors abnehmbar ist.

3. Anordnung nach Anspruch 2, **dadurch gekennzeichnet, daß** die Auswerte-Schaltung (9) aus einem Strom-Spannungs-Wandler zur Abgabe eines Meßsignals (b) und nachgeschalteter, mit der Wechselspannung (a) und dem Meßsignal (b) gespeister phasenabhängiger Gleichrichteranordnung (20) besteht und daß am Ausgang (32) der phasenabhängigen Gleichrichteranordnung (20) das Motorschaltsignal (g) für das Freigeben des Antriebsmotors mit einem ersten Pegel und für das Abschalten des Antriebsmotors beim Auftreten von Hindernissen in der Nähe der Sensoreinrichtung (3) mit einem zweiten Pegel abnehmbar ist.

4. Anordnung nach Anspruch 3, **dadurch gekennzeichnet, daß** die phasenabhängige Gleichrichteranordnung (20) einen Phasenschieber (23) enthält, an dessen Eingang die Wechselspannung (a) als Referenzsignal anliegt und dessen Ausgang mit je einem Eingang zweier Schwellwertschaltungen (24, 25) zur Ableitung von Schaltspannungen verbunden ist, deren jeweiliger Ausgang an je einen Steuereingang zweier Analogschalter (26, 27) angeschlossen ist, daß das Meßsignal (b) dem einen Analogschalter (26) direkt und dem anderen Analogschalter (27) invertiert zugeführt wird, daß der Ausgang jedes Analogschalters (26 bzw. 27) mit je einem Eingang einer Addierstufe (29) verbunden ist, an deren Ausgang über einen Tiefpaß (31) das Motorschaltsignal (g) abnehmbar ist.

5. Anordnung nach Anspruch 1 beim Schließen von Cabrio-Verdecken, **dadurch gekennzeichnet, daß** die Sensoreinrichtung (3) für die Detektion von Hindernissen beim Schließen des Cabrio-Verdeckes (2) im Querholmen oberhalb der Frontscheibe des Kraftfahrzeuges integriert ist.

6. Anordnung nach Anspruch 1 beim Schließen von Fenstern, **dadurch gekennzeichnet, daß** die Sensoreinrichtung für die Detektion von Hindernissen beim Schließen der Seitenfenster in den oberen Querholmen der Fensterrahmen integriert ist.

7. Anordnung nach einem der vorhergehenden Ansprüche, **dadurch gekennzeichnet, daß** die Sensoreinrichtung von einer elastischen Streifendichtung umschlossen ist, die auch den Isolator bildet.

## Claims

1. Arrangement for detecting obstacles, in particular when the tops (2) of convertible cars, motor vehicle windows or the like are automatically closed, having a capacitive sensor device, **characterized in that** the capacitive sensor device (3) composed of an electrically conductive transmitter surface (4), to which an oscillator (8) is connected, on one side and an electrically conductive sensor wire (7) and at least one essentially potential-free metal surface (5) on the other side of an insulator (6) is provided, and **in that** the sensor wire (7) is connected to an evaluation circuit (9).

2. Arrangement according to Claim 1, **characterized in that** the transmitter surface (4) to which an alternating voltage (a) is provided is arranged opposite the metal surface (5) which is spaced from it by the insulator (6) and which has a cutout which is suitably shaped to receive the sensor wire (7) in the insulator (6), and **in that** the sensor wire (7) is connected to the evaluation circuit (9) at whose output (11) a motor switching signal for the switching of a drive motor can be tapped.

3. Arrangement according to Claim 2, **characterized in that** the evaluation circuit (9) is composed of a current/voltage converter for outputting a measuring signal (b) and a downstream phase-dependent rectifier arrangement (20) which is supplied with the alternating voltage (a) and the measuring signal (b), and **in that** the motor switching signal (g) can be tapped at the output (32) of the phase-dependent rectifier arrangement (20) with a first level for enabling the drive motor and with a second level for switching off the drive motor when obstacles occur in the vicinity of the sensor device (3).

4. Arrangement according to Claim 3, **characterized in that** the phase-dependent rectifier arrangement (20) contains a phase shifter (23) at whose input the alternating voltage (a) is present as a reference signal and whose output is connected to, in each case, one input of two threshold value circuits (24, 25) for deriving switching voltages, the respective output of which is connected to in each case one control input of two analogue switches (26, 27), **in that** the measuring signal (b) is fed directly to one analogue switch (26) and in inverted form to the other analogue switch (27), **in that** the output of each analogue switch (26 or 27) is connected to, in each case, one input of an adder stage (29) at whose output the motor switching signal (g) can be tapped via a low-pass filter (31).

5. The arrangement as claimed in Claim 1 for the closing of the tops of convertible cars, **characterized in that**, for the detection of obstacles when the top (2) of a convertible car closes, the sensor device (3) is integrated into the transverse member above the front window pane of the motor vehicle.

6. Arrangement according to Claim 1 for the closing of windows, **characterized in that**, for the detection of obstacles when the side windows close, the sensor device is integrated into the upper transverse members of the window frames.

7. Arrangement according to one of the preceding claims, **characterized in that** the sensor device is surrounded by an elastic strip seal which also forms the insulator.

## Revendications

1. Dispositif de détection d'obstacles notamment à la fermeture automatique de capote de cabriolet (2), de vitre de portière de véhicule automobile ou d'éléments analogues, comportant un capteur capacitif,
**caractérisé en ce que**
le capteur capacitif (3) est formé d'une surface émettrice (4) conductrice électrique à laquelle est raccordé un oscillateur (8), prévue d'un côté, et d'un fil de capteur (7) conducteur électrique et d'au moins une surface métallique (5) pratiquement sans potentiel prévus sur l'autre côté d'un isolant (6), le fil de capteur (7) étant relié à un circuit de traitement (9).

2. Dispositif selon la revendication 1,
**caractérisé en ce que**
la surface émettrice (4) recevant une tension alternative (a) est prévue en regard de la surface métallique (5) séparée par l'isolant (6), cette surface (5) ayant une section de forme appropriée pour recevoir le fil de capteur (7) dans l'isolant (6), et
le fil de capteur (7) est relié à un circuit d'exploitation (9) dont la sortie (11) fournit un signal de commutation du moteur pour commuter le moteur d'entraînement.

3. Dispositif selon la revendication 2,
**caractérisé en ce que**
le circuit d'exploitation (9) est formé d'un convertisseur intensité-tension fournissant un signal de mesure (b) et suivi d'un redresseur (20) dépendant de la phase, recevant la tension alternatives (a) et le signal de mesure (b), et
la sortie (32) du redresseur dépendant de la phase (20) fournit le signal de commutation du moteur (g) pour libérer le moteur avec un premier niveau, et avec un second niveau pour couper le moteur en présence d'obstacles à proximité du capteur (3).

4. Dispositif selon la revendication 3,
**caractérisé en ce que**
le redresseur dépendant de la phase (20) comporte un déphaseur (23) dont l'entrée reçoit la tension alternative (a) comme signal de référence et dont la sortie est reliée chaque fois à une entrée de deux circuits à seuil (24, 25) pour déduire des tensions de commutation, et la sortie respective de ces circuits est reliée chacune à une entrée de commande de deux commutateurs analogiques (26, 27),
le signal de mesure (b) est appliqué directement à un commutateur analogique (26) et de façon inversée à l'autre commutateur analogique (27), et
la sortie de chaque commutateur analogique (26, 27) est reliée à une entrée d'un additionneur (29) dont la sortie fournit le signal de commutation du moteur (g) par l'intermédiaire d'un filtre passe-bas (31).

5. Dispositif selon la revendication 1 pour la fermeture d'une capote de cabriolet,
**caractérisé en ce que**
le capteur (3) pour la détection d'obstacles lors de la fermeture de la capote de cabriolet (2) est intégré dans la traverse supérieure du pare-brise du véhicule.

6. Dispositif selon la revendication 1 appliqué à la fermeture d'une vitre de portière,
**caractérisé en ce que**
le capteur de détection d'obstacles à la fermeture d'une fenêtre de portière est intégrés dans la traverse supérieure du châssis de la fenêtre.

7. Dispositif selon l'une quelconque des revendications précédentes,
**caractérisé en ce que**
le capteur est entouré par un joint en forme de ruban élastique qui constitue également l'isolant.
